Europäisches Patentamt

European Patent Office

Office européen des brevets

(19)

(11) Publication number: **0 080 541**
A1

(12) # EUROPEAN PATENT APPLICATION

(21) Application number: **81305666.0**

(22) Date of filing: **01.12.81**

(51) Int. Cl.³: **B 01 D 35/02**
**B 01 D 29/06**

(43) Date of publication of application:
**08.06.83 Bulletin 83/23**

(84) Designated Contracting States:
**AT BE CH DE FR GB IT LI LU NL SE**

(71) Applicant: **Tonitto, Francis**
**109, Prince Edward Park Road**
**Woronora New South Wales 2232(AU)**

(72) Inventor: **Tonitto, Francis**
**109, Prince Edward Park Road**
**Woronora New South Wales 2232(AU)**

(74) Representative: **Walter, Douglas Ernest et al,**
**HASELTINE LAKE & CO. 28, Southampton Buildings**
**London WC2A 1AT(GB)**

(54) **Filter.**

(57) A filter (10) for the cooling system of an automobile engine, said filter (10) having a filter body (11) defining a filter chamber (12), a filter assembly located in said chamber (12), said assembly including a filter element (13) formed of sheet mesh material bent about a vertical axis so as to provide two converging side panels (22, 23).

FIG.1

EP 0 080 541 A1

"FILTER"

The present invention relates to filters and more particularly to water filters to be used in filtering the water of a cooling system of an automobile engine.

Failure of the cooling system of automobile engines can often be attributed to blockage of the vehicle radiator due to the build up of particle matter in the cooling tubes of the radiator. This particle matter may be by way of rust, and/or scale coming away from the internal water passages of the engine block, or alternatively portions of the hoses connecting the various parts of the engine. This particle matter often blocks the entrance to the cooling passages of the radiator.

It is an object of the present invention to overcome or substantially ameliorate the above disadvantages.

There is disclosed herein a liquid filter comprising a filter chamber having an inlet and an outlet, a filter assembly located in said chamber and positioned between said inlet and said outlet so that water passing therethrough must pass through the filter assembly, wherein said filter assembly is adapted to collect particle matter from the water passing through it, and wherein said filter assembly includes a filter element formed of substantially sheet mesh material bent about a generally vertical axis so as to provide two converging side panels through which liquid being filtered must pass.

A preferred form of the present invention will now be described by way of example with reference to the accompanying drawings, wherein:

Figure 1 is a parts exploded schematically perspective view of a water filter to be used to filter the water of a cooling system of an automobile engine; and

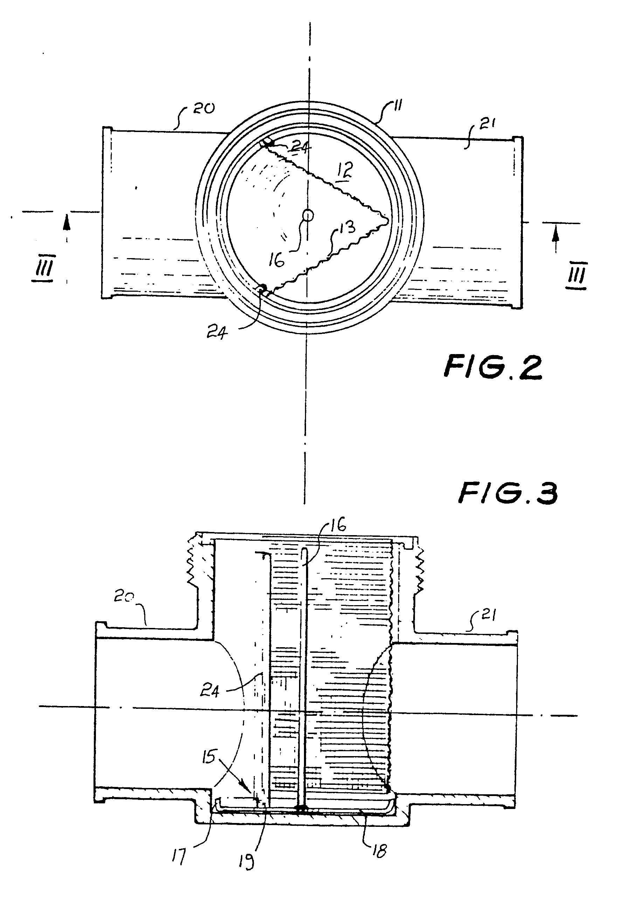

Figure 2 is a plan view of the assembled water filter of Figure 1.

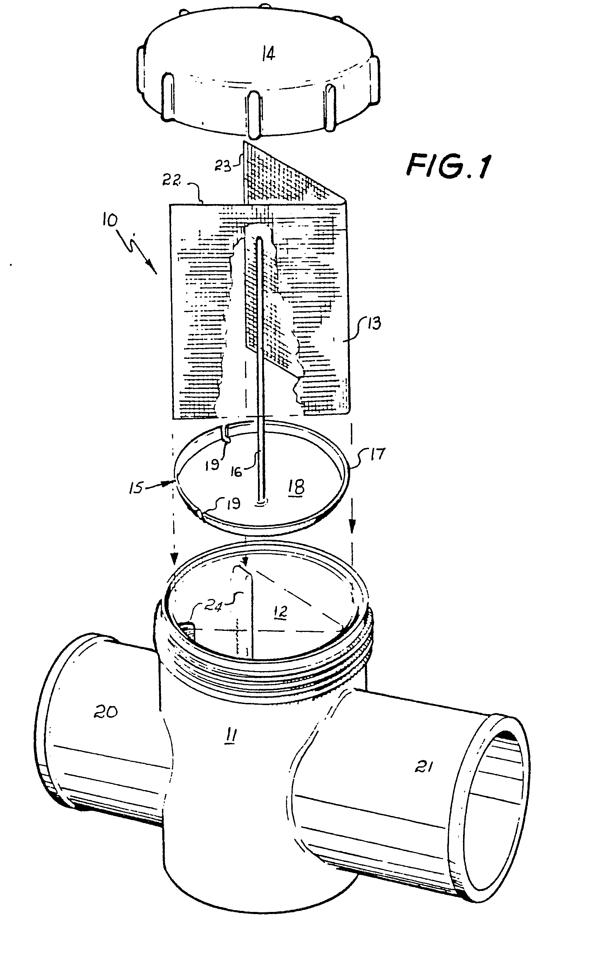

The filter 10 of Figure 1 has a body 11 which defines a filter chamber 12 within which is located a filter element 13. The top of the chamber 12 is closed by means of a cap 14 which is secured to the body 11 by means of a threaded flange. Preferably the cap 14 is transparent so that the filter element 13 may be inspected to determine when cleaning is required. The body 11 has a water inlet spigot 20 and a water outlet spigot 21.

As can be noted from Figure 1, the filter element 13 is of a generally V-shaped or U-shaped configuration in plan view so as to have two converging sides 22 and 23. Supporting the filter element 13 is a tray 15 with a stem 16 and side flange 17. The filter element 13 is seated on the floor 18 of the tray 15 so that particle matter collected by the filter element 13 may be withdrawn by removal of the tray 15. The stem 16 is provided to be gripped by a person cleaning the tray.

In operation, the particles being of a size larger than the mesh of the filter element 13 are trapped by the filter element 13 and may be removed from within the cooling system by removing the filter element 13 and tray 15. By having the floor 18, the filter element 13 may be removed without dislodging particles from the filter element 13 and redepositing them in the cooling system. i.e. by having the floor 18, the particle matter will tend to collect on the lower portions of the filter element 13.

To correctly locate the filter element 13, the body 11 is provided with locating lugs 24 which abut the filter element. The tray 15 is provided with grooves 19 to accommodate the lugs 24.

As a further modification the filter 10 may be provided with a temperature sensor which can be adapted to operate an audible or visual alarm or alternatively a gauge to indicate the temperature of the water in the filter 10.

CLAIMS

1.  A liquid filter comprising a filter chamber having an inlet and an outlet, a filter assembly located in said chamber and positioned between said inlet and said outlet so that water passing therethrough must pass through the filter assembly, wherein said filter assembly is adapted to collect particle matter from the water passing through it, and wherein said filter assembly includes a filter element formed of substantially sheet mesh material bent about a generally vertical axis so as to provide two converging side panels through which liquid being filtered must pass.

2.  The liquid filter of claim 1 wherein said filter assembly further includes a tray upon which said element is mounted, said tray being adapted to collect particles filtered from the liquid by said element.

3.  The liquid filter of claim 2 wherein said tray is substantially horizontal with a vertical stem which may be gripped by a person cleaning the filter assembly.

4.  The liquid filter of claim 3 further including location lugs projecting inwardly of said filter chamber so as to provide means for correctly locating said filter element.

FIG.1

0080541

FIG.2

FIG.3

European Patent Office

# EUROPEAN SEARCH REPORT

**0080541**

Application number

EP 81 30 5666

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | DE-A-2 018 291 (MECANO-BONDY) *Pages 3-5* | 1,2,3 | B 01 D 35/02 B 01 D 29/06 |
| | --- | | |
| X,Y | DE-C- 258 509 (VULCAN WERKE) *Pages 1-2* | 1,2,3 | |
| | --- | | |
| Y | US-A-2 798 613 (EARL E.TINKER) *Column 1-4* | 1,4 | |
| | ----- | | |

TECHNICAL FIELDS SEARCHED (Int. Cl. 3)

B 01 D

The present search report has been drawn up for all claims

| Place of search THE HAGUE | Date of completion of the search 06-08-1982 | Examiner DE PAEPE P.F.J. |
|---|---|---|